(19) Europäisches Patentamt
European Patent Office
Office européen des brevets

(11) Veröffentlichungsnummer: **0 158 165**
**B1**

(12) # EUROPÄISCHE PATENTSCHRIFT

(45) Veröffentlichungstag der Patentschrift: **18.01.89**

(51) Int. Cl.⁴: **C 08 G 18/38**, C 08 G 18/50, C 09 D 5/18

(21) Anmeldenummer: **85103098.1**

(22) Anmeldetag: **18.03.85**

(54) **Gegebenenfalls poröse Intumeszenzmassen und ihre Verwendung.**

(30) Priorität: **28.03.84 DE 3411327**

(43) Veröffentlichungstag der Anmeldung:
**16.10.85 Patentblatt 85/42**

(45) Bekanntmachung des Hinweises auf die Patenterteilung:
**18.01.89 Patentblatt 89/3**

(84) Benannte Vertragsstaaten:
**BE CH DE FR GB IT LI NL SE**

(56) Entgegenhaltungen:
**EP-A- 0 051 106**
**EP-A- 0 061 024**
**US-A- 3 396 129**
**US-A- 4 107 145**
**US-A- 4 187 354**

(73) Patentinhaber: **BAYER AG, Konzernverwaltung RP Patentabteilung, D-5090 Leverkusen 1 Bayerwerk (DE)**

(72) Erfinder: **von Bonin, Wulf, Dr., Mendelssohnstrasse 30, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft gegebenenfalls poröse Intumeszenzmassen auf Basis von Polyurethanen, die als Rezepturbestandteil eine Kombination aus Polyolen, Cyanursäurederivaten und phosphorhaltigen Polyhydroxylverbindungen enthalten und harten Charakter haben.

Als Intumeszenzmassen werden solche Materialien verstanden, die bei Einwirkung von Feuer und Hitze aufschäumen und dabei einen isolierenden und feuerabweisenden Schaum ausbilden, der die rückwärtigen Bezirke von der Feuereinwirkung schützt. Solche Intumeszenzmassen sind in Form von Lacken, Beschichtungen, Mörteln und Kitten bekannt.

Gute Intumeszenzmassen sollten bei Flammenzutritt ihr Volumen mindestens verdoppeln können und ausserdem beständig sein gegen Wasserangriff. Insbesondere ist es von technischem Interesse, wenn diese Eigenschaften kombiniert werden können mit Halogenfreiheit und geringem Raumgewicht bzw. Schaumstoffstruktur, d.h. gewisser Isolierwirkung im unbeanspruchten Zustand, sowie Härte und gegebenenfalls Zähigkeit.

Massive oder geschäumte harte Intumeszenzmassen mit guter Formbeständigkeit könnten als Halbzeuge wie Platten, Formteile, Profile, Beschichtungen, Granulate oder Verfüllungen eine Vielzahl von Anwendungen im Bereich des vorbeugenden Brandschutzes finden.

Die Mitverwendung von Melamin bei der Herstellung von Weichschaumstoffen unter Verwendung von im wesentlichen linearen Polyolen vorzugsweise Polyetherpolyolen, ist prinzipiell bekannt (DE-A-2 815 554).

Solche Schaumstoffe haben zwar den Charakter der Schwerentflammbarkeit und brennen bei Beflammung nicht mehr vollständig ab. Auf keinen Fall haben sie jedoch den Charakter von Intumeszenzmassen; eine Volumenvergrösserung bei Beflammung unter Ausbildung eines feuerabweisenden Schaumes wird nicht beobachtet.

Gemäss der DE-A-3 025 217 lassen sich flammwidrige Dichtungsmassen, die frei von Phosphor und Halogen sind, unter Verwendung von verzweigten Hydroxylgruppen aufweisenden Polyester herstellen. Solche Dichtungsmassen haben ebenfalls keinen Intumeszenzcharakter, d.h. sie schäumen bei Beflammung nicht auf.

In der DE-A-3 025 309 werden gegebenenfalls geschäumte Intumeszenzmassen beschrieben, die erhalten werden durch Umsetzung von

1. Polyisocyanaten mit

2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen cycloaliphatischen, aromatischen, araliphatischen oder heterocyclischen Mono- und/oder Polyaminen, Carbonylverbindungen und Dialkylphosphiten, gegebenenfalls unter anschliessendem Oxalkylieren, und

3. aromatischen Hydroxycarbonsäuren oder deren Salzen und

4. gegebenenfalls Wasser und/oder weiteren organischen Verbindungen mit gegenüber Isocyanaten reaktionsfähigen Wasserstoffatomen.

Gemäss dieser DE-A- können auch Hydroxylgruppen aufweisende Polyester sowie Melamin mitverwendet werden: Dabei handelt es sich jedoch nicht um die erfindungsgemäss zu verwendenden hochverzweigten, d.h. polyfunktionellen Polyestertypen, sondern um die Mitverwendung von linearen Polyestern. Hierbei werden jeweils harte Produkte erhalten, deren Sprödigkeit jedoch oftmals einer störungsfreien Verwendung entgegensteht.

Gemäss der DE-A-3 041 731 werden gegebenenfalls geschäumte Intumeszenzmassen mit plastisch-elastischem Charakter erhalten durch Umsetzung eines Polyisocyanates mit einem Gemisch, bestehend aus mindestens zwei Hydroxylgruppen aufweisenden phosphorhaltigen Kondensationsprodukten, Polyestern und Cyanursäure(derivaten) und gegebenenfalls Wasser und gegebenenfalls weiteren organischen Verbindungen mit gegenüber Isocyanaten reaktionsfähigen Wasserstoffatomen.

Es wurde nunmehr festgestellt, dass überraschenderweise das Cyanursäurederivat Melamin, das gemäss dieser DE-OS vorzugsweise eingesetzt wird, auch durch Melaminphosphat ersetzt werden kann und dass weiterhin durch Erhöhung der angewandten Isocyanatmengen bei gleichzeitiger Reduzierung der Polyolmenge hervorragend intumeszierende zäh-harte Schaumstoffe erhalten werden können.

Ein völlig unerwarteter Vorteil dieser neuen Intumeszenzmassen besteht darin, dass sie vor dem Aufschäumen bei Beflammung nicht schmelzflüssig werden, d.h. dass in Grenzsituationen der thermischen Beanspruchung im Vorfeld eines aktuellen Flammenzutritts kein Abschmelzen und Ablaufen des Intumeszenzmaterials erfolgt.

Gegenstand der Erfindung sind somit nicht schmelzbare, gegebenenfalls geschäumte Intumeszenzmassen, erhalten durch Umsetzung von

1. 35–90 Gew.-Teilen eines Polyisocyanats mit 100 Gew.-Teilen eines Gemisches, bestehend aus

2. 20–75 Gew.-% an mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschliessendem Oxalkylieren,

3. 2 bis 30 Gew.-% an Hydroxylgruppen aufweisenden Polyestern der OH-Zahl 140 bis 300, erhalten durch Umsetzung von zwei bis zehn C-Atome aufweisenden Polycarbonsäuren mit mindestens zwei Polyolen aus zwei verschiedenen der drei folgenden Gruppen

a) mehr als drei OH-Gruppen aufweisende Hydroxylverbindungen vom Molekulargewicht bis 200,

b) drei OH-Gruppen aufweisende Hydroxylverbindungen vom Molekulargewicht bis 150,

c) zwei OH-Gruppen aufweisende Hydroxylverbindungen vom Molekulargewicht bis 110,

wobei ein Polyol der Gruppe a) angehören soll, gegebenenfalls unter Mitverwendung von Polyethern mit einer durchschnittlichen OH-Zahl von 120 bis 500, die durch Anlagerung von Alkylenoxiden, die zu 50–100 Gew.-% aus Ethylenoxid bestehen, an niedermolekulare Starter erhalten worden sind und

4. 25 bis 75 Gew.-% an Melaminsalzen und

5. 0 bis 5 Gew.-% Wasser.

Besonders bevorzugt sind Intumeszenzmassen, dadurch gekennzeichnet, dass als Polyisocyanate solche verwendet werden, wie sie durch Anilin-Formaldehyd-Kondensation und anschliessende Phosgenierung erhalten werden, und auch solche, die als mindestens zwei Hydroxylgruppen aufweisende Kondensationsprodukte solche der Formel

$$(RO)_2PO{-}CH_2{-}N=(CHX{-}CHX{-}OH)_2$$

enthalten, worin in der Formel

R = $C_1$–$C_8$-Alkyl oder $C_1$–$C_8$-Hydroxyalkyl und

X = H oder Methyl bedeuten,

sowie auch solche, die als Melaminderivate Melaminphosphate enthalten.

Die Erfindung betrifft auch die Verwendung der neuen Intumeszenzmassen als massive oder poröse Hohlraumfüllungen, Verkleidungen, Isolierungen, Bauteile, Halbzeuge, Granulate, Pulver, Fugenabdichtungen und Beschichtungen mit Intumeszenzeigenschaften, sowie zur Herstellung von Formkörpern mit Intumeszenzeigenschaften durch Reaktion in Formen oder durch nachträgliche Verformung der ausreagierten Reaktionsgemische.

Im Falle der vorliegenden Erfindung werden nun ausgesprochen harte, gegebenenfalls geschäumte Intumeszenzmassen erhalten.

Harte bzw. zäh-harte Intumeszenzmassen, wie sie erfindungsgemäss erhalten werden, besitzen ein besonders technisches Interesse, weil sich daraus hergestellte Vorformlinge besonders einfach durch Sägen oder Schneiden bearbeiten lassen, weil sie auch zur Verschalung von Kabeln und Rohren verwendet werden können und ihre Anwendbarkeit durch Erschütterungen des Applikationsfeldes nicht beeinträchtigt wird. Ihre erhebliche Resistenz gegen Wasserzutritt ist weiterhin ein interessanter technischer Vorteil, wie auch die Möglichkeit zu thermoplastischer Verformbarkeit bei Temperaturen zwischen ca. 60 und 160 °C daraus hergestellter Halbzeuge.

Die erfindungsgemäss zugänglichen Intumeszenzmassen sind schwer entflammbar, auch ohne Mitverwendung von Halogenverbindungen. Sie schäumen bei Beflammung bis zum Zehnfachen und mehr ihres ursprünglichen Volumens auf und bilden dabei einen feuerabweisenden Schaum, der die rückwärtigen Bereiche vor weiterem Flammenzutritt abschirmt. Sie bilden keine ablaufende Schmelze bei Erhitzung.

Sie können auch in der Nähe (d.h. unterhalb) ihrer Aufschäumtemperatur thermoplastisch verarbeitet werden. Bei geeigneter Temperaturführung im Laufe der thermoplastischen Verarbeitung (z.B. durch Pressen, Tiefziehen) zu Formkörpern können diese geschäumten oder massiven Charakter haben. Das thermoplastische Verhalten unter gewissen Bearbeitungsbedingungen kann auch zur Modifizierung von Formteilen, z.B. Platten aus geschäumtem Material herangezogen werden, etwa zum Trennen oder Verschweissen mit anderen Materialien oder auch zum Prägen bzw. bleibendem Verformen.

Bei der Herstellung der neuen Intumeszenzmaterialien kann kontinuierlich oder diskontinuierlich gearbeitet werden.

Die Herstellung kann durch Vermischen der Komponenten bzw. bereits vorgemischter Komponentengemische vor Ort geschehen und die Reaktionsmischung maschinell oder per Hand in z.B. zu verschliessende Öffnungen bzw. beheizte oder unbeheizte Formen drucklos oder unter Druck eingegossen oder eingesprüht werden, wo sie dann aufschäumt bzw. aushärtet. Sie kann bei entsprechender technischer Ausrüstung auf die zu schützenden Substrate und Untergründe aufgesprüht, aufgestrichen oder aufgegossen werden. Es ist auch in Betracht zu ziehen, dass man mit den erfindungsgemässen Reaktionsgemischen zunächst Halbzeuge, z.B. Schaumstoffe, Profile oder Beschichtungen herstellt und diese dann in technisch erforderlicher Weise weiterverarbeitet, z.B. durch Schneiden, durch Warmverformen, Granulieren, Mahlen oder Mischen, Beschichten oder Verkleben.

Durch Kombination der Reaktionsgemische mit geschäumten oder massiven anorganischen oder organischen Zuschlagstoffen, wie z.B. Polystyrolschaum, Polyurethanschaum, Phenolplasten, Aminoplasten oder Kies oder Blähton, Harnstoff- oder Phenolharzschäumen, Schaumglas, Glasfasern, Holz, Mineralwolle, Bims usw., können auch Verbunde mit speziellen Intumeszenzeigenschaften erhalten werden. Die Anwendung der erfindungsgemässen Intumeszenzmassen zur Herstellung von mit Fasern oder Drähten bzw. Blechen, Geweben, Strängen oder Vliesen aus organischen oder anorganischen Materialien verstärkten Formteilen oder ihre Verwendung als Bestandteil in Mehrschicht- bzw. Sandwichaufbauten sind ebenfalls in Betracht zu ziehen; ebenso die Kombination mit anderen Intumeszenzmaterialien auf organischer oder anorganischer Basis, z.B. wasserhaltigen Silikaten, blähfähige Graphite, Phenolharze, Harnstoffharze, Melaminharze, Epoxidharze, Polyurethanharze usw.

Als Füllstoffe kommen allein oder in Kombination insbesondere Aluminiumoxidhydrate, Kreide, Kaolin, Glas und massive oder hohle Perlen aus silikatischem Material in Betracht, z.B. sogenannte Mikroballons, Aluminiumoxidhydrate sind wegen ihrer Dehydratisierungsfähigkeit neben Hohlperlen bevorzugt.

Als sonstige Füllstoffe kommen neben Mineralfasern, Glasfasern, Kohlenstoffasern oder organischen Fasern solche in Betracht, die vorliegen als Granulat, Pulver, Stäbchen, Bändchen, Blättchen, in verschiedensten Kristallformen oder solche, die als Schaumstoff, Kugel oder Hohlkugel vorliegen können.

Von Interesse sind erfindungsgemäss auch dehydratisierbare oder Ammoniak abspaltende Füllstoffe, die ihrerseits durch Zersetzungsreaktion bzw. Wasserabspaltung oder Verdampfung bei Temperaturen zwischen 100 °C und 700 °C, vorzugsweise 120 °C und 400 °C, Wärme «verbrauchen».

Solche Füllstoffe sind z. B. Alkalisilikate, Ceolithe bzw. sonstige hydratisierte Phosphate, Silikate, Borsilikate oder Borate, Aluminiumoxidhydrate, Cyanursäureabkömmlinge, Phenol-, Melamin- bzw. Harnstoff-Formaldehydharze, blähfähige Graphite und Glimmer, Vermikulite und Perlite, kristallwasserhaltige Mineralien wie Alumohydrocalcit, Artinit, Dawsonit, Ettringit, Hydrocalumit, Hydroganat, Hydromagnesit, Hydrotalkit, Nesquehonit, Scarbroit, Thaumasit und Wermlandit. Von besonderem Interesse sind jedoch Aluminiumhydroxide bzw. Aluminiumoxidhydrate oder hydratisierte Tonerden.

Zu Zwecken des Bindens von Wasser im Reaktionsgemisch sind wasserfreie Zeolithe als Füllstoff geeignet, Einsatzmenge je nach Erfordernis.

Ausgangskomponenten für die Herstellung der erfindungsgemässen Intumeszenzmassen sind:

1. Aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q\ (NCO)_n$$

in der

n = 2–4, vorzugsweise 2,

und

Q einen aliphatischen Kohlenwasserstoffrest mit 2–18, vorzugsweise 6–10 C-Atomen,

einen cycloaliphatischen Kohlenwasserstoffrest mit 4–15, vorzugsweise 6–10 C-Atomen,

einen aromatischen Kohlenwasserstoffrest mit 6–15, vorzugsweise 6–13 C-Atomen

der einen araliphatischen Kohlenwasserstoffrest mit 8–15, vorzugsweise 8–13 C-Atomen

bedeuten, z. B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-B-1 202 785, US-A-3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäss in Frage: Triphenylmethan-4,4',4''-triisocyanat, Polyphenyl-polymethylen-polyisocyanate, wie sie durch Anilin-Formaldehyd-Kondensation und anschliessende Phosgenierung erhalten und z. B. in den GB-A-874 430 und 848 671 beschrieben werden, m- und p-Isocyanatophenylsulfonylisocyanate gemäss der US-A-3 454 606, perchlorierte Arylpolyisocyanate, wie sie z. B. in der DE-Auslegeschrift 1 157 601 (US-A-3 277 138) beschrieben werden, Carbodiimidgruppen aufweisende Polyisocyanate, wie sie in der DE-C-1 092 007 (US-Patentschrift 3 152 162) sowie in den DE-A-2 504 400, 2 537 685 und 2 552 350 beschrieben werden, Norbornan-Diisocyanate gemäss US-A-3 492 330, Allophanatgruppen aufweisende Polyisocyanate, wie sie z. B. in der GB-A-994 890, der BE-A-761 626 und der NL-A-7 102 524 beschrieben werden, Isocyanuratgruppen aufweisende Polyisocyanate, wie sie z. B. in der US-Patentschrift 3 001 973, in den DE-C-1 022 789, 1 222 067 und 1 027 394 sowie in den DE-A-1 929 034 und 2 004 048 beschrieben werden, Urethangruppen aufweisende Polyisocyanate, wie sie z. B. in der BE-A-752 261 oder in den US-A-3 394 164 und 3 644 457 beschrieben werden, acylierte Harnstoffgruppen aufweisende Polyisocyanate gemäss der DE-C-1 230 778, Biuretgruppen aufweisende Polyisocyanate, wie sie z. B. in den US-A-3 124 605, 3 201 372 und 3 124 605 sowie in der GB-A-889 050 beschrieben werden, durch Telomerisationsreaktionen hergestellte Polyisocyanate, wie sie z. B. in der US-A-3 654 106 beschrieben werden, Estergruppen aufweisende Polyisocyanate, wie sie z. B. in den GB-A-965 474 und 1 072 956, in der US-A-3 567 763 und in der DE-C-1 231 688 genannt werden, Umsetzungsprodukte der obengenannten Isocyanate mit Acetalen gemäss der DE-C-1 072 385 und polymere Fettsäureester enthaltende Polyisocyanate gemäss der US-A-3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren («TDI»), insbesondere aber Polyphenylpolymethylen-polyisocyanate, wie sie durch Anilin-Formaldehyd-Kondensation und anschliessende Phosgenierung hergestellt werden («rohes MDI»), ferner Carbodiimidgruppen, Urethangruppen, Allophanatgruppen, Isocyanuratgruppen, Harnstoffgruppen oder Biuretgruppen aufweisende Polyisocyanate («modifizierte Polyisocyanate»), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Mindestens zwei Hydroxylgruppen aufweisende phosphorhaltige Kondensationsprodukte, wie sie z.B. durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschliessendem Oxalkylieren, erhalten werden können. Derartige Kondensationsprodukte sind an sich bekannt, z.B. aus der DE-C-1 143 022, US-A-3 076 010, DE-B-1 803 747 und DE-B-1 928 265.

Erfindungsgemäss bevorzugt sind als mindestens zwei Hydroxylgruppen aufweisende phosphorhaltige Kondensationsprodukte solche der Formel

$$(RO)_2PO{-}CH_2{-}N=(CHX{-}CHX{-}OH)_2,$$

in der

R = $C_1$–$C_8$-Alkyl oder $C_1$–$C_8$-Hydroxyalkyl, vorzugsweise Ethyl oder Hydroxyethyl, und

X = H oder Methyl, vorzugsweise H, bedeuten.

3. Hydroxylgruppen aufweisende Polyester der OH-Zahl 140 bis 300, erhalten durch Umsetzung von zwei bis zehn C-Atome aufweisenden aliphatischen, cycloaliphatischen, araliphatischen und aromatischen Polycarbonsäuren mit mindestens zwei Polyolen aus zwei verschiedenen der drei folgenden Gruppen

a) mehr als drei OH-Grupen aufweisende Hydroxylverbindungen vom Molekulargewicht bis 200,

b) drei OH-Gruppen aufweisende Hydroxylverbindungen vom Molekulargewicht bis 150,

c) zwei OH-Gruppen aufweisende Hydroxylverbindungen vom Molekulargewicht bis 110,

wobei ein Polyol der Gruppe a) angehören soll.

Als Polycarbonsäuren kommen die an sich bekannten in Frage; neben den Benzoldicarbonsäuren sind aliphatische Polycarbonsäuren mit 3–10 C-Atomen bevorzugt.

Als Benzoldicarbonsäuren seien z.B. Phthalsäure und Terephthalsäure genannt; als aliphatische Polycarbonsäuren werden insbesondere solche mit drei bis acht C-Atomen wie Zitronensäure, Oxalsäure, Malein- und Fumarsäure, Bernsteinsäure verwendet. Wegen der guten Zugänglichkeit ist Adipinsäure bevorzugt.

Von den Hydroxylverbindungen der Gruppe a) ist Pentaerythrit bevorzugt, es sind aber z.B. auch in Betracht zu ziehen Mannit, Sorbit, Xylit, Formit, d.h. Zuckerpolyole.

Von den Hydroxylverbindungen der Gruppe b) ist Glycerin bevorzugt, in Betracht zu ziehen sind aber auch z.B. Trimethylolpropan oder Triethanolamin.

Von den Hydroxylverbindungen der Gruppe c) ist neben Propylenglykol, verschiedenen Butandiolen oder Neopentylglykol bevorzugt Ethylenglykol zu nennen.

Hochverzweigte Polyester aus Adipinsäure, Pentaerythrit, Glycerin und Ethylenglykol sind erfindungsgemäss besonders bevorzugt.

Die Polyester besitzen bei 75 °C Viskositäten um 500 bis 8000 cP, bevorzugt werden Viskositäten von 600 bis 5000 cP bei 75 °C. Die Säurezahlen sollen unter 10 liegen, vorzugsweise zwischen 0 und 5. Die Molekulargewichte liegen um 500 bis 2000, vorzugsweise bei 600 bis 1500, die OH-Zahlen bei 140 bis 300, vorzugsweise 170–220.

Erfindungsgemäss werden gegebenenfalls Polyether einer durchschnittlichen OH-Zahl von 120 bis 500 mitverwendet, die durch Anlagerung von Alkylenoxiden, die zu 50–100 Gew.-% aus Ethylenoxid bestehen, an Zerewitinow-aktive niedermolekulare Starter erhalten worden sind. Mehr als bifunktionelle Polyether mit OH-Zahlen von etwa 200 bis 400 sind besonders bevorzugt. Diese Polyether werden in einer Menge von 0–50 Gew.-%, bezogen auf die vorgenannten Polyester, mitverwendet.

«Mehr als bifunktionell» bedeutet im Sinne der Erfindung, dass auch bifunktionelle Polyether im Gemisch mit tri- und/oder höherfunktionellen Polyethern vorliegen können. Bevorzugt wird eine Funktionalität von 2,5 bis 4.

Wenngleich als Polyether erfindungsgemäss Ethylenoxidanlagerungsprodukte bevorzugt werden, ist es prinzipiell auch möglich, bis zu etwa 50 Gew.-% des angelagerten Ethylenoxids durch Propylenoxid bzw. andere Alkylenoxide zu erhalten, wobei jedoch mit einer Verschlechterung des Intumeszenz- und/oder Brandverhaltens der Intumeszenzmassen gerechnet werden muss, so dass die Mitverwendung von Polyethern, bei deren Herstellung neben Ethylenoxid andere Alkylenoxide, z.B. Propylenoxid mitverwendet werden, weniger bevorzugt ist.

Es ist möglich, auch Epichlorhydrin mitzuverwenden, wobei jedoch der Nachteil der Halogenhaltigkeit entsteht.

Die Herstellung der Polyether erfolgt nach dem Fachmann bekannten Methoden, wie sie in der Polyetherchemie üblich sind.

Als niedermolekulare Startermoleküle kommen die für die Herstellung von Polyethern an sich bekannten Verbindungen in Frage, z.B. Wasser, Ethylenglykol, Propylenglykol, Butandiol, Trimethylolpropan, Glyzerin, Triethanolamin, Pentaerythrit, Ethylendiamin, Toluylendiamine, die verschiedensten Zucker und deren Hydrierungsprodukte, Formosen und Formite, Anilin, Polyalkylenpolyamine, Benzidine bzw. deren Hydrierungsprodukte, Anilin-Formaldehydkondensate und deren Hydrierungsprodukte. Auch aliphatische und aromatische Polycarbonsäuren sind als Starter in Betracht zu ziehen, auch Aminosäuren oder Aminoalkohole wie Ethanolamin.

Es können auch halogenhaltige Starter wie bromierte Alkohole, etwa Bisbrommethyl-propandiol Verwendung finden.

Die Mitverwendung weiterer Polyester und/oder Polyether anderer Zusammensetzung ist grundsätzlich möglich, jedoch sollte ihr Anteil 20 Gew.-% der gesamten Polyolmenge nicht überschreiten.

4. Melaminsalze mit organischen und anorganischen Säuren wie Oxalsäure, Halogenessigsäuren, HBr, Schwefelsäure, Molybdänsäure, Borsäure, vor allem aber mit Phosphorsäuren, bzw. Polyphosphorsäuren, d.h. Derivate vom Melaminphosphat-Typ.

Unter diesen werden vorzugsweise Umsetzungsprodukte aus 1 Mol Melamin mit 0,01 bis 2,5, vorzugsweise 0,5 bis 1,0 Mol ortho-Phosphorsäure verstanden. Es können aber auch andere Phosphorsäuren, wie etwa Meta-, Pyro- oder Polyphosphorsäure oder solche mit anderen Wertigkeitsstufen des Phosphors in Betracht gezogen werden. Die Herstellung der Phosphate geschieht z.B. durch Umsetzung von Melamin mit $H_3PO_4$ in wässriger Suspension bei 10–120 °C, abkühlen, filtrieren und trocknen. Mischungen von Melamin mit Melaminphosphaten hohen Gehalts an Phosphorsäure können anstelle von Melaminphosphaten mit niedrigem Phosphorsäuregehalt verwendet werden.

5. Gegebenenfalls Wasser.

Es wurde gefunden, dass für die vorteilhaften Eigenschaften der neuen Intumeszenzmassen, insbesondere der Intumeszenzschäume, nicht die für die konventionelle Polyurethanchemie üblichen stöchiometrischen Verhältnisse charakteristisch sind. Vielmehr werden die Komponenten 2, 3, 4 und gegebenenfalls 5 ungeachtet der in Bezug auf die Isocyanatchemie zu fordernden Stöchiometrie zusammengestellt und die so erhältliche Mischung in einfachen Vorversuchen mit verschiedenen, innerhalb eines erfindungsgemäss gegebenen Mengenspielraums liegenden Mengen des Polyisocyanats umgesetzt, um die gewünschte optimale Wirksamkeit empirisch zu ermitteln.

Die so gefundenen Richtmengen für die einzelnen Komponenten 2, 3, 4 und gegebenenfalls 5 in dem mit dem Polyisocyanat umzusetzenden Reaktionsgemisch ergänzen sich zu 100% und betragen:

- für die mindestens zwei Hydroxylgruppen aufweisenden phosphorhaltigen Kondensationsprodukte (2): 20 bis 75, vorzugsweise 30 bis 50 Gew.-%,
- für die Polyester (3): 2 bis 30, vorzugsweise 5 bis 25 Gew.-%,
- für die Melaminsalze (4): 25 bis 75, vorzugsweise 30–55 Gew.-%,
- für Wasser (5): 0–5, vorzugsweise 0–1,5 Gew.-%,

100 Gew.-Teile dieses Reaktionsgemisches werden mit 35 bis 90, vorzugsweise 35 bis 60 Gew.-Teilen des Polyisocyanats umgesetzt.

Die Herstellung der Intumeszenzmassen kann in einem Lösungsmittel, vorzugsweise jedoch lösungsmittelfrei, erfolgen. Von besonderem Interesse sind Schaumstoffe; diese können Raumgewichte von ca. 40 bis 900 kg/m$^3$, bevorzugt zwischen 100 und 600 kg/m$^3$, aufweisen. Eine besonders ausgewogene Kombination zwischen aus Gründen der Isolierfähigkeit angestrebtem niedrigem Raumgewicht und für die Aufschäumwirkung bei Flammenzutritt in der Raumeinheit notwendiger Masse stellen erfindungsgemäss zugängliche Schaumstoffe mit Raumgewichten von ca. 120 bis 600 kg/m$^3$ dar.

Man kann die verschiedenen Reaktionskomponenten einzeln zusammenführen; zweckmässigerweise jedoch macht man eine Vormischung aus den mit den Polyisocyanaten (Komponente 1) reaktionsfähigen Komponenten 2, 3, 4 und gegebenenfalls 5 und erhält so gegebenenfalls nach kurzem Erwärmen eine flüssige Reaktionskomponente, in der alle notwendigen Bestandteile bis auf das Polyisocyanat enthalten sind. Auf diese Weise lassen sich die erfindungsgemässen Intumeszenzmassen als Zweikomponentengemisch formulieren bzw. aus diesem herstellen. Hierzu sind die üblichen Einrichtungen der Polyurethantechnologie einsetzbar.

Es ist durchaus möglich, der Komponentenvormischung gegebenenfalls auch dem Isocyanat, noch weitere Rezepturbestandteile zuzusetzen, z.B. Harnstoff, Harnstoffkondensate, Formaldehydkondensate, Phenolharze, Phosphate, Aminpolyphosphate, Phosphorsäureester z.B. Trikresylphosphat oder Dibutylkresylphosphat, Al-Oxidhydrate, Glaspulver, Treibmittel, Vermiculite, massive oder hohe Glas- oder sonstige Silikatperlchen und sonstige, das Brandverhalten modifizierende Zusatzstoffe.

Obgleich es überraschenderweise nicht notwendig ist, zur Herstellung der erfindungsgemässen, gegebenenfalls geschäumten Intumeszenzmassen Katalysatoren für die Schaumstoffbildung oder sonstige Hilfsmittel, wie sie sonst in der Schaumstoffchemie üblich sind, beispielsweise auch zusätzlich gasförmige oder niedrig siedende Treibmittel, bzw. Treibgaserzeuger mitzuverwenden, können solche zusätzlichen Hilfsmittel, ebenso wie emulgierende, trennende, farbgebende, konservierende, Hydrolysenschutz vermittelnde, geruchsaktive oder sonstige Zusatzstoffe natürlich im Einzelfall als Rezepturkomponente in Betracht gezogen werden. Beispielsweise führt die Mitverwendung von zur Carbodiimidbildung Anlass gebenden Katalysatoren, wie sie z.B. in der Klasse der Phospholinoxide wie etwa 1-Methyl-1-oxo-phospholin, bekannt sind, zu Intumeszenzmassen mit verbesserter Stabilität gegen Hydrolyse.

Weiterhin ist in Betracht zu ziehen, auch solche Zusatzstoffe rezepturmässig in den erfindungsgemässen Intumeszenzmassen miteinzusetzen, die die Schaumbildung im Falle der Beflammung zu steigern helfen können. Solche sind beispielsweise aliphatische und insbesondere aromatische Hydroxycarbonsäuren wie Salizylsäure oder p-Hydroxybenzoesäure, oder bei erhöhter Temperatur Wasser, Kohlehydrate, Stickstoff oder $CO_2$ abgebende Substanzen wie Triazole, Azodicarbonamide, Sulfohydrazide oder Harnstoff-Dicarbonsäureanhydrid.

Man kann aus den erfindungsgemässen Intumeszenzmassen, z.B. durch Verpressen oder Formgiessen und Gelieren durch Schneiden oder Schmelzen, Formkörper fabrizieren, die bei Temperaturen zwischen ca. 200 und 350 °C aufschäumen und so eine Flammenausbreitung verhin-

dern, die also als Dichtelemente, Sicherungsvorrichtung, Brandsperren, geeignet sind. Man kann Verfugungen vornehmen, Kabeldurchbrüche verschliessen, wobei z.B. auch eine Art Beton aus dem Intumeszenzmittel und Steinen und/oder geblähten Teilchen wie Blähton, Blähgas, Vermiculite, Perlit und/oder auch Schaumstoffperlen auf z.B. Polystyrolbasis hergestellt und verwendet werden kann.

Ebenfalls ist von Interesse die Herstellung von gegebenenfalls armierten Beschichtungen nahezu beliebiger Dicke auf Metall, z.B. Stahlträgern und -blechen, Holz, z.B. Türblättern, Dachbalken, auf Mauerwerk, auf Kunststoffen, seien es Kabelisolierungen oder Schaumstoffplatten. Wenn man die Beschichtungen auf einer tragfähigen Platte oder Stützkonstruktion vornimmt, z.B. in bzw. auf einer Reckmetallplatte, einer [Waben]platte aus Metall, Pappe, Papier, Gips, Holz, Keramik oder Kunststoff, dann können so leicht feuerhemmende Platten oder Wandelemente hergestellt werden.

Die Intumeszenzmassen sind auch für die Herstellung von Antidröhnbelägen oder Schallschutzelementen von Interesse.

Auch die Innenbeschichtung von feuerhemmenden Türen, die im Brandfall aufschäumt und isolierend wirkt, ist in Betracht zu ziehen, desgleichen die Herstellung von Tür- oder sonstigen Dichtungen, die im Brandfall aufschäumen und den vorgelagerten Schlitz abdichten. Man kann auch Dichtprofile, z.B. aus elastischem Material, mit den gegebenenfalls gepulverten erfindungsgemässen Intumeszenzmassen füllen oder hinterfüllen und so eine Brandschutzdichtung erzielen. Durch geeignete Anordnung kann man in Kaminen, Lüftungs- und Klimaanlagen, Rohrleitungen und Ein-/Austrittsöffnungen Sperren einbauen, die im Fall einer Erhitzung auf ca. 200 °C bis 400 °C den weiteren Durchtritt von Gasen bremsen oder verhindern. Solche Anordnungen sind z.B. Stapel von in geringen Abständen parallel liegenden Platten, mit den Intumeszenzmassen beschichtete Siebe und Lochblenden oder mit Granulaten der Intumeszenzmassen locker gefüllte Rohrabschnitte. Die gegebenenfalls geschäumten Intumeszenzmassen können auch als Filterelemente für Gase eingesetzt werden, die sich bei zu grosser Temperaturerhöhung verschliessen.

Man kann auch z.B. Formkörper, die aus den Intumeszenzmassen leicht herstellbar sind, oder auch Granulate verschiedenster Körnung ein- oder mehrstufig verschäumen, indem man sie auf Temperaturen über 200 °C erhitzt, vorzugsweise auf Temperaturen zwischen 250 und 1800 °C, insbesondere 250–800 °C. Die Verschäumung kann frei oder in geschlossenen oder offenen Formen vorgenommen werden, wobei diese Formen zweckmässigerweise Öffnungen zum Austritt von Dampf und Luft aufweisen sollten. Hierbei entstehen feuerabweisende Schaumstoffe, sogenannte Carbonisierungsschäume.

Das Erhitzen kann durch Strahlungswärme, durch Behandeln mit Heissdampf oder Heissluft oder sonstigen heissen Gasen, durch Mikrowellen oder Hochfrequenz bzw. durch Wärmeleitung in Luft oder Flüssigkeitsbädern bzw. Metallbädern geschehen.

Man kann die erfindungsgemässen Intumeszenzmassen auch auf Trägermaterialien aufbringen und dort verschäumen, z.B. indem man Blähtonteilchen beschichtet, dann in eine Form schüttet und durch erhitzt, wobei ein Block aus in Carbonisierungsschaum eingebettetem Blähton entsteht. Eine entsprechend beschichtete Holz- oder Eisenplatte kann bei ca. 300 °C zu einer Schaumstoffkombinationsplatte verarbeitet werden, wobei die Schaumstoffoberfläche durch eine weitere Holz- oder Eisenplatte abgedeckt werden kann.

Zu erwähnen ist auch das Ausschäumen von Hohlräumen, z.B. in Kabelschächten, aber auch in Ziegelsteinen und sonstigen Baustoffen, was z.B. durch Einbringen der Reaktionsmischungen oder fertigen Schaumstoff-Intumeszenzmassen in geeigneter Menge in den Hohlraum des kalten oder noch warmen Steines gelingt.

Die erfindungsgemässen Intumeszenzmassen sind auch in Form von Rohrhalbschalen oder von Vollmänteln zur Isolierung von Rohren oder Kabeln geeignet. Von Interesse ist, dass die Isolierung auch in situ vorgenommen werden kann, indem man das Rohr oder das zu isolierende Stück mit dem Reaktionsgemisch beschichtet und gegebenenfalls zum Aufschäumen bringt.

Aus den harten Intumeszenzmassen können auch feuerhemmende Gehäuse, Gehäuseteile, Gefässe und Abdeckungen oder sonstige Formkörper hergestellt werden.

Die Herstellung und Verarbeitung der zu den Intumeszenzmassen führenden Reaktionsgemische kann kontinuierlich oder diskontinuierlich erfolgen. Man kann die Komponenten einzeln oder als Gemische zusammenführen. Vorzugsweise werden alle Reaktionskomponenten bis auf das Isocyanat zusammengefasst, so dass eine 2-Komponentenverarbeitung erfolgen kann, z.B. in normalen Handrührgefässen mit mechanischen Rührern, in Rührwerks- oder Düsenmischköpfen oder in Statikmischern, wie sie auch aus der Polyurethanchemie bekannt sind. Die Ausreaktion kann frei oder in gekühlten, kalten oder beheizten Formen drucklos oder unter Druck erfolgen.

Die folgenden Versuchsbeschreibungen sollen den Erfindungsgegenstand beispielhaft erläutern, nicht aber einschränken. Die angegebenen Teile sind Gewichtsteile und/oder Gewichtsprozente, falls nicht anders vermerkt ist.

Beispiele

Die folgenden Versuchsreihen sollen den Zusammenhang zwischen Rezeptur und Eigenschaften der erfindungsgemäss zugänglichen Intumeszenzmassen erläutern.

Hierzu wurde verwendet:

Als Polyisocyanat (1) ein durch Phosgenierung von Anilin-Formaldehyd-Kondensaten erhaltenes, handelsübliches technisches Polyisocyanatisomerengemisch mit einem Gehalt von ca. 65% Zweikerndiisocyanaten und ca. 35% Mehrkernpolyisocyanaten.

als hochverzweigter Polyester (3) ein Polyester aus ca. 1 Gew.-% Neopentylglykol, 61 Gew.-% Adipinsäure, ca. 9 Gew.-% Pentaerythrit, ca. 4 Gew.-% Glycerin und ca. 25 Gew.-% Ethylenglykol mit einer OH-Zahl von 256; einer Säurezahl von 3,2; einer Viskosität bei 75 °C von 920 cP, und einer Funktionalität von ca. 4,

als Polyether wurde ein durch Alkalikatalyse gemäss dem Stand der Technik hergestelltes Addukt von Ethylenoxid an Glycerin mit einer OH-Zahl von 251 verwendet;

als phosphorhaltiges Kondensationsprodukt (2) wird $(C_2H_5O)_2PO.CH_2N(C_2H_4OH)_2$ in technischer Qualität, verwendet, hier bezeichnet als P-Diol (2),

als Melaminphosphat wurde ein Additions-Produkt von 0,75 Mol $H_3PO_4$ an 1 Mol Melamin eingesetzt, hergestellt durch Vereinigung der Komponenten in Wasser und Trocknen des Reaktionsgemisches bei 130 °C.

| Beispiel | 1 | 2 | 3 | 4 | 5 |
|---|---|---|---|---|---|
| Mischung aus | | | | | |
| Melamin (4) Tle. | 30 | – | – | – | |
| Wasser (5) Tle. | – | 0.5 | 0.5 | 0.3 | 0.5 |
| Polyester (3) Tle. | 50 | 50 | 25 | – | 2 |
| Polyether (3) Tle. | – | – | – | – | 43 |
| P-Diol (2) Tle. | 100 | 100 | 100 | 100 | 100 |
| Melaminphosphat (4) Tle. | 70 | 100 | 100 | 100 | 100 |

Diese Mischung wird bei Raumtemperatur mit 120 Teilen Polyisocyanat (1) verrührt. Das so erhaltene Reaktionsgemisch beginnt etwa 50 Sekunden nach Beginn der Vermischung aufzuschäumen bzw. auszuhärten. Nach ca. 5 Minuten ist die Reaktion beendet. Nach Beispiel 2 und 3 entsteht ein Schaumstoff mit einem Raumgewicht von ca. 150 kg/m$^3$. Beispiel 2 liefert ein hartes Material mit Raumgewicht von ca. 1000 kg/m$^3$.

Zur Prüfung der erhaltenen Hartschäume auf Verhalten bei Beflammung wird ein Musterwürfel von 1,5 cm Kantenlänge auf einem Metallrost seitlich einer Bunsenbrennerflamme ausgesetzt.

In allen Fällen verbrennt der Schaumstoff nicht, sondern verkohlt unter starkem Aufschäumen (bis zu 800 Vol.-% Zunahme). In allen Fällen verlischt die Flamme sofort, wenn man den Bunsenbrenner während der Beflammung kurzfristig entfernt. In den Fällen 1 bis 5 schäumt die beflammte Probe zu einem Vielfachen ihres ursprünglichen Volumens auf (Intumeszenzwirkung).

Halbiert man in den Beispielen 1 bis 5 die eingesetzte Melaminphosphatmenge, so haben bei prinzipiell gleichem Brandverhalten die entstehenden geschäumten Intumeszenzmassen um ca. 25% verringerte Raumgewichte und neigen zu geringfügigem Nachbrennen (5–15 Sekunden).

Zur Prüfung der Intumeszenzeigenschaften wird eine münzenartige Scheibe, Durchmesser 2,5 cm, Höhe 0,5 cm aus den nach Beispiel 1–5 erhaltenen Materialien geschnitten und in einem 10 cm hohen Messingrohr (Wandstärke 0,9 mm) mit einem Durchmesser von 2,5 cm innen plaziert. Dann wird das senkrecht stehende Messingrohr mit der unten befindlichen Materialpille in einen auf 400 °C vorgeheizten Schrank gebracht und dort für 30 Minuten belassen. Dann wird beurteilt, wie hoch der Intumeszenzschaum in dem Rohr aufgestiegen ist. Es wurden folgende Steighöhen gemessen:

| Beispiel | Steighöhe |
|---|---|
| 1 | 8,8 cm |
| 2 | 7,0 cm |
| 3 | 7,1 cm |
| 4 | 6,9 cm |
| 5 | 5,8 cm |

Zur Prüfung der Fliessneigung der Intumeszenzmaterialien wurde der beschriebene Prüfwürfel auf eine 10° geneigte glatte, auf ca. 700 °C geheizte Stahlplatte gelegt.

Bei fliessenden Intumeszenzmaterialien beginnt der Prüfwürfel auf seiner Schmelze die Platte hinabzugleiten. Das nach Beispiel 2 erhaltene Material steigt ohne abzugleiten auf dem an der Grenzschicht zwischen heisser Zone und kühlem Material gebildeten Intumeszenzschaum auf und liegt schliesslich an der ursprünglichen Expositionsstelle auf dem gebildeten isolierenden Intumeszenzschaum. Während dieser Exposition beginnt das Material nicht zu brennen.

Gemäss Beispiel 2 wird ein Reaktionsgemisch hergestellt und auf ein laufendes Band als ca. 1,3 cm Durchmesser aufweisender Strang durch eine Düse aufgetragen. Das Material schäumt auf dem Band zu einem quasi endlosen Profil aus geschäumter Intumeszenzmasse mit halbkreisförmigem Querschnitt auf und kann dann geschnitten und als Fugendichtungsprofil mit Intumszenzeigenschaften verwendet werden.

Beispiel 6

Es wird verfahren wie bei Beispiel 2, anstelle des dort verwendeten Polyisocyanats (1) wird jedoch ein analog erhaltenes technisches Polyisocyanat (1) mit einem Mehrkernanteil nicht von ca. 35%, sondern von ca. 10% eingesetzt. Man erhält eine geschäumte, harte Intumeszenzmasse, die sich von der Probe 2 lediglich um ein um ca. 20% verringertes Raumgewicht von ca. 120 kg/m$^3$ unterscheidet. Im Beflammungstest wird kein Nachbrennen und eine mehr als 300%ige Volumenvergrösserung beobachtet.

Beispiel 7

In eine ca. 1 cm starke Tonplatte wird ein Schlitz von ca. 10 cm Länge und 1 cm Breite eingefräst. Dann legt man die Platte plan auf eine Polyethylenfolie und giesst den Schlitz mit dem Reaktionsgemisch nach Beispiel 1 aus. Nach dem Aushärten wird das aus dem Schlitz herausgetretene Material über der Plattenoberfläche so abgeschnitten, dass eine ca. 2 mm breite Überlappung der Intumeszenzmasse über die Plattenoberfläche erhalten bleibt, d.h. dass der in den Schlitz eingebrachte Schaumstoff etwa T-förmiges Profil

besitzt, sowie eine Materialdicke von ca. 1,3 cm aufweist. Nun wird die so ausgerüstete Platte so über einen Bunsenbrenner angebracht, dass die Unterseite der Platte, d.h. die den Schlitz füllende Intumeszenzmasse etwa in der Mittel zwischen dem äusseren Rand der entleuchteten Erdgasflamme und dem inneren blauen Flammenkegel angeordnet ist. In dieser Stellung wird die Beflammung durchgeführt, ohne dass nach 90 Minuten die Füllung des Schlitzes von der Flamme durchgebrannt worden ist.

Beispiel 8

Ein gemäss der Rezeptur nach Beispiel 1, 2 und 3 hergestelltes Intumeszenzmaterial wird in Würfel von 1,5 cm Kantenlänge geschnitten. Ein Teil dieser Würfel wird in 1 l Wasser eingelegt und mittels eines Netzes unter der Wasseroberfläche 8 Tage aufbewahrt. Anschliessend wird getrocknet und der Beflammungstest gemäss Beispiel 1–5 durchgeführt. Gegenüber dem nicht in Wasser gelagerten Referenzmaterial wird bei Beflammung festgestellt: Die Intumeszenzeigenschaften sind erhalten geblieben, das Aufschäumverhalten hat sich nicht verschlechtert (Schaumhöhe 7 cm/Typ 2).

Beispiel 9

Das gemäss Beispiel 4 hergestellte Reaktionsgemisch wird in mit Wachs imprägnierte konische Becherformen eingebracht und dort aufgeschäumt. Nach ca. 10 Minuten entnimmt man den Formen die konischen Formkörper. Diese dienen zum gegen Branddurchtritt schützenden Verschliessen von mehr oder weniger runden Löchern in Leichtbauwänden oder von Rohrenden, indem man sie in die Löcher einbringt und dort verkeilt. Es wird ein rauchgasdichter Verschluss solcher Öffnungen erreicht.

Beispiel 10

Man stellt ein Reaktionsgemisch analog Beispiel 2 her, aber ohne Mitverwendung von Wasser.

Sprüht man eine solche Reaktionsmischung vor dem Erhärten auf eine reine Stahlblechoberfläche, so erhärtet sie dort zu einem wasserbeständigen Überzug mit guter Haftung und Intumeszenzwirkung, so dass das rückwärtige Stahlteil einen Schutz gegen Flammenzutritt erhält.

Die hart-zähen Intumeszenzmassen können auch als Material zur Herstellung von elektrischen Kabel-Schutzmanschetten oder Rohren dienen. Um Elektrokabel angebracht, stellen sie einen guten Schutz gegen Flammendurchtritt dar.

Solche Manschetten werden z.B. erhalten, indem man das Reaktionsgemisch nach Beispiel 1, 2 oder 3 vor dem Erhärten in eine Rohrform aus Silikon-Kautschuk eingiesst. Es kann nach 5 Minuten entformt werden. Entformt man früher, lassen sich die Formteile vor dem endgültigen Aushärten noch weiter verformen, z.B. biegen oder zusammenquetschen bzw. mit einem beheizbaren oder kalten Dorn konisch aufweiten.

Mit Mischungen analog Beispiel 2 oder 10 können auch Rohrmanschetten mit einem Aussenmantel aus z.B. Stahlblech zu Rohrhalbschalen ausgegossen werden. Wenn diese Rohrmanschetten z.B. um Rohre aus thermoplastischem Material befestigt werden, so können diese Rohre durch die Intumeszenz der Rohrmanschettenfüllung zusammengequetscht und so gegen den Durchtritt von Feuer geschützt werden. Gegebenenfalls füllt das Intumeszenzmaterial schliesslich das dem Feuer ausgesetzte Thermoplastrohr völlig aus und verschliesst es.

**Patentansprüche**

1. Nicht schmelzbare, gegebenenfalls poröse Intumeszenzmassen, erhalten durch Umsetzung von

1. 35–90 Gew.-Teilen eines Polyisocyanats mit 100 Gew.-Teilen eines Gemischs, bestehend aus

2. 20–75 Gew.-% an mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/ oder Polyaminen, Carbonylverbindungen und Dialkylphosphiten, gegebenenfalls unter anschliessendem Oxalkylieren,

3. 2–30 Gew.-% an Hydroxylgruppen aufweisenden Polyestern der OH-Zahl 140 bis 300, erhalten durch Umsetzung von zwei bis zehn C-Atome aufweisenden Polycarbonsäuren mit mindestens zwei Polyolen aus zwei verschiedenen der drei folgenden Gruppen

a) mehr als drei OH-Gruppen aufweisende Hydroxylverbindungen vom Molekulargewicht bis 200,

b) drei OH-Gruppen aufweisende Hydroxylverbindungen vom Molekulargewicht bis 150,

c) zwei OH-Gruppen aufweisende Hydroxylverbindungen vom Molekulargewicht bis 110, wobei ein Polyol der Gruppe a) angehören soll, gegebenenfalls unter Mitverwendung von Polyethern mit einer durchschnittlichen OH-Zahl von 120 bis 500, die durch Anlagerung von Alkylenoxiden, die zu 50 bis 100 Gew.-% aus Ethylenoxid bestehen, an niedermolekulare Starter erhalten worden sind,

4. 20–75 Gew.-% an Melaminsalzen,

5. 0–5 Gew.-% Wasser.

2. Intumeszenzmassen gemäss Anspruch 1, dadurch gekennzeichnet, dass als Polyisocyanate solche verwendet werden, wie sie durch Anilin-Formaldehyd-Kondensation und anschliessende Phosgenierung erhalten werden.

3. Intumeszenzmassen gemäss Anspruch 1 und 2, dadurch gekennzeichnet, dass als mindestens zwei Hydroxylgruppen aufweisende Kondensationsprodukte solche der Formel

$$(RO)_2PO{-}CH_2{-}N=(CHX{-}CHX{-}OH)_2$$

in der
R = $C_1$–$C_8$-Alkyl oder $C_1$–$C_8$-Hydroxyalkyl und
X = H oder Methyl bedeuten, verwendet werden.

4. Intumeszenzmassen nach Anspruch 1 bis 3, dadurch gekennzeichnet, dass man als Polyester hochverzweigte Polyester aus Adipinsäure, Pentaerythrit, Glycerin und Ethylenglykol verwendet.

5. Intumeszenzmassen nach Anspruch 1 bis 4, dadurch gekennzeichnet, dass man als Melaminsalz Melaminphosphat verwendet.

6. Verwendung der Intumeszenzmassen gemäss Anspruch 1 bis 5 als Hohlraumfüllungen, Fugenabdichtungen, Platten, Halbzeuge und Beschichtungen mit Intumeszenzeigenschaften.

7. Verwendung der Intumeszenzmassen gemäss Anspruch 1 bis 5, erhalten durch Reaktion in Formen oder durch nachträgliche Verformung der ausreagierten Reaktionsgemische, zur Herstellung von Formkörpern mit Intumeszenzeigenschaften.

## Claims

1. Non-fusible, optionally porous intumescent materials, obtained by reaction of

1. 35–90 parts by weight of a polyisocyanate containing 100 parts by weight of a mixture comprising

2. 20–75% by weight of phosphorus-containing condensation products having at least two hydroxyl groups, which can be obtained by condensation of primary or secondary aliphatic, cycloaliphatic, aromatic, araliphatic or heterocyclic mono- and/or polyamines optionally containing OH groups, carbonyl compounds and dialkyl phosphites, optionally with subsequent oxalkylation,

3. 2–30% by weight of polyesters having hydroxyl groups and of OH number 140 to 300, obtained by reaction of polycarboxylic acids having two to ten C atoms with at least two polyols from two different groups of the following three

a) hydroxyl compounds of molecular weight up to 200, having more than three OH groups,

b) hydroxyl compounds of molecular weight up to 150, having three OH groups,

c) hydroxyl compounds of molecular weight up to 110, having two OH groups,

where one polyol belongs to group a), optionally additionally using polyethers having an average OH number from 120 to 500, which have been obtained by addition of alkylene oxides, which consist of 50 to 100% by weight of ethylene oxide, to lower molecular weight starters,

4. 20–75% by weight of melamine salts,

5. 0–5% by weight of water.

2. Intumescent materials according to Claim 1, characterized in that as polyisocyanates, those are used which can be obtained by aniline/formaldehyde condensation and subsequent phosgenation.

3. Intumescent materials according to Claim 1 and 2, characterized in that as condensation products having at least two hydroxyl groups, those of the formula

$$(RO)_2PO–CH_2–N=(CHX–CHX–OH)_2,$$

in which
R denotes $C_1$–$C_8$-alkyl or $C_1$–$C_8$-hydroxyalkyl, and
X denotes H or methyl, are used.

4. Intumescent materials according to Claim 1 to 3, characterized in that highly branched polyesters of adipic acid, pentaerythritol, glycerol and ethylene glycol are used as polyesters.

5. Intumescent materials according to Claim 1 to 4, characterized in that melamine phosphate is used as the melamine salt.

6. Use of the intumescent materials according to Claim 1 to 5 as fillings for cavities, sealings for joints, sheets, semi-fabricated goods and coatings having intumescent properties.

7. Use of the intumescent materials according to Claim 1 to 5, obtained by reaction in moduls or by supplementary shaping of the reacted reaction mixtures, for the production of moulded articles having intumescent properties.

## Revendications

1. Compositions intumescentes, non fusibles, éventuellement poreuses, obtenues par réaction de

1. 35 à 90 parties en poids d'un polyisocyanate avec 100 parties en poids d'un mélange consistant en

2. 20 à 75% en poids de produits de condensation, contenant du phosphore et présentant au moins deux groupes hydroxyles, que l'on peut obtenir par condensation de monoamines et/ou de polyamines primaires ou secondaires, aliphatiques, cycloaliphatiques, aromatiques, araliphatiques ou hétérocycliques, contenant éventuellement des groupes OH, de composés carbonylés et de phosphites de dialkyle, éventuellement avec oxyalkylation subséquente,

3. 2 à 30% en poids de polyesters présentant des groupes hydroxyles, ayant un indice de OH compris entre 140 et 300, obtenus par réaction d'acides polycarboxyliques, présentant 2 à 10 atomes de carbone, avec au moins deux polyols choisis parmi deux groupes différents parmi les trois groupes suivants:

a) des composés hydroxylés présentant plus de trois groupes OH et ayant un poids moléculaire pouvant aller jusqu'à 200,

b) des composés hydroxylés présentant trois groupes OH et ayant un poids moléculaire jusqu'à 150,

c) des composés hydroxylés présentant deux groupes OH et ayant un poids moléculaire jusqu'à 110,

un groupe polyol devant appartenir au groupe a), éventuellement en utilisant aussi des polyéthers ayant un indice moyen de OH de 120 à 500, que l'on a obtenus par fixation d'oxydes d'alkylènes, consistant pour 50 à 100% en poids en

de l'oxyde d'éthylène, sur des composés de départ à bas poids moléculaire,

4. 20 à 75% en poids de sels de mélamine,

5. 0 à 5% en poids d'eau.

2. Compositions intumescentes selon la revendication 1, caractérisées en ce qu'on utilise comme polyisocyanates ceux que l'on a obtenu par condensation aniline/formaldéhyde puis phosgénation.

3. Compositions intumescentes selon la revendication 1 et la revendication 2, caractérisées en ce qu'on utilise, comme produits de condensation présentant au moins deux groupes hydroxyles, ceux répondant à la formule

$$(RO)_2PO-CH_2-N=(CHX-CHX-OH)_2,$$

dans laquelle

R représente un groupe alkyle en $C_1$–$C_8$ ou hydroxyalkyle en $C_1$–$C_8$, et

X représente H ou un groupe méthyle.

4. Compositions intumescentes selon l'une des revendications 1 à 3, caractérisées en ce qu'on utilise comme polyesters des polyesters hautement ramifiés dérivant de l'acide adipique, du pentaérythritol, du glycérol et de l'éthylèneglycol.

5. Compositions intumescentes selon l'une des revendications 1 à 4, caractérisées en ce qu'on utilise comme sel de mélamine du phosphate de mélamine.

6. Utilisation des compositions intumescentes selon l'une des revendications 1 à 5 comme emplissage d'espaces creux, étanchements de joints, plaques, demi-produits et revêtements ayant des propriétés d'intumescence.

7. Utilisation des compositions intumescentes selon l'une des revendications 1 à 5, obtenues par réaction dans des moules ou par formage ultérieur des mélanges réactionnels ayant réagi, pour produire des objets façonnés ou moulés ayant des propriétés d'intumescence.